# EUROPEAN PATENT SPECIFICATION

(11) **EP 2 427 318 B1**
(45) Date of publication and mention of the grant of the patent: **09.07.2014**
(21) Application number: 10766142.3
(22) Date of filing: 06.05.2010
(51) Int. Cl.: B29C 45/28

(54) **COUPLING APPARATUS AND METHOD**
VERBINDUNGS-VORRICHTUNG UND METHODE
APPAREIL D'ACCOUPLEMENT ET PROCÉDÉ ASSOCIÉ

(30) Priority: 06.05.2009 US 436458
(43) Date of publication of application: 14.03.2012
(73) Proprietor: Synventive Molding Solutions, Inc., Peabody, MA 01960 (US)
(72) Inventor: GALATI, Vito, Rowley, MA 01969 (US); SAVOIE, Paul, Joseph, Nashua, NH 03060 (US); BERNIER, Albert, R., Gloucester, MA 01930 (US)
(74) Representative: Sutto, Luca
(86) International application number: PCT/US2010/033883
(87) International publication number: WO 2010/129782

(56) References cited:
- EP-A1- 0 920 970
- EP-A1- 1 223 019
- FR-A1- 2 889 098
- US-A- 4 698 013
- US-B1- 6 638 049

## Description

### Field of the Invention

This invention relates to a coupling assembly that provides one or more of mechanical and thermal isolation between a pin and an actuator for moving the pin. In a particular embodiment an apparatus and method are disclosed for coupling and decoupling of a valve pin assembly tn an actutor in an injection molding apparatus.

### Background

There are various industrial applications in which an elongated shaft, also referred to as a pin, must be driven translationally, i.e., in the direction of the elongated (longitudinal) axis of the pin. Typically, the pin has a pin head at one end for engagement by the drive actuator assembly. In various applications, it may be desirable or necessary to mechanically or thermally isolate, in at least some respect, the pin from the actuator assembly.

For example, in hot runner systems used in injection molding, valve pins are used to open and close the gate to a cavity in the mold in which the molded part is formed. Each valve pin is driven by an actuator assembly and extends through various parts of the injection molding machine which are at different temperatures (e.g. heated nozzle, heated manifold, cold mold and mounting plates). These temperature differences and/or differences in thermal expansion (during heating/cooling) of the various parts can place undesirable side load forces on the pin, causing the pin to become misaligned, bent or even broken. Still further, the pin may transmit heat from a hot part to a cold part of the machine, which again would be undesirable. There is thus a need to provide a mechanism for coupling a pin to an actuator which translationally drives the pin so as to maintain alignment, prevent deformation of the pin and/or prevent undesired thermal transmission to the actuator and/or other parts of the injection molding apparatus.

Document US 6638049 B1 discloses an injection molding machine having an apparatus for controlling delivery of a fluid material to mold cavities comprising an actuator with a stem having, at an end thereof, a lateral slot for receiving the head of a pin. The pin head and slot are configured so that the pin head fits snugly within the slot. The pin and the actuator are mounted into mounting plates of the apparatus.

### Summary of the invention

In accordance with the invention there is provided an injection molding system having the features of any one of the appendend claims from 1 to 12.

The pin connector typically comprises an adapter coupled to a top end of the stem, the adapter configured to be reversibly receivable within the actuator coupling in a radial direction (transverse to the axial). The adapter preferably comprises an enlarged head which is reversibly couplable to and decouplable from the top end of the stem.

The system is preferably adapted to allow the pin connector to travel a selected radial distance relative to the axial path of travel within the actuator coupling and remain coupled while the mounting plate remains coupled to the mold and the pin stem remains extended into the manifold.

The pin stem is preferably mounted to the manifold for radial movement of the pin stem together with the manifold relative to the mounting plate on expansion or movement of the manifold relative to the mounting plate.

The system is preferably adapted to allow the pin connector to travel a selected radial distance within the actuator coupling while the mounting plate remains coupled to the mold, the pin connector remains coupled to the actuator coupling and the pin stem remains extended into the manifold.

The mounting plate is preferably decouplable from the mold leaving the pin stem extended into the manifold when the pin head is decoupled from the actuator coupling.

In another aspect of the invention there is provided a method of disassembling according to any one of claims 13 to 15.

Such method can further comprise decoupling and removing the mounting plate from the mold leaving the valve pin behind extended into the manifold. Such a method can further comprise removing the actuator and the mounting plate together leaving the valve pin behind extended into the manifold.

### Brief Description of the Drawings

Fig. 1 is a schematic overview of an injection molding apparatus including one embodiment of the coupling apparatus of the invention;
Fig. 2a is an exploded partial schematic view of the coupling apparatus of Fig. 1, in an assembled state; and Fig. 2b is an exploded partial schematic view showing the coupling apparatus of Fig. 1, in a disassembled state;
Fig. 3a is an enlarged schematic view of a valve pin head and a pin head adapter, in an assembled state, according to one embodiment; and Fig. 3b is an exploded view of the pin head and adapter of Fig. 3a in a disassembled state;
Fig. 4 is a perspective view of one embodiment of an actuator coupled to a valve pin;
Fig. 5 is a schematic partial cross-sectional view of the actuator and valve pin of Fig. 4 mounted in an injection molding apparatus;
Fig. 6 is a top plan view of the apparatus of Fig. 5, with the actuator removed;
Figs. 7a-7e illustrate a series of method steps wherein Fig. 7a is a side schematic sectional view (similar to Fig. 5) showing the actuator and valve pin assembly coupled and mounted in an injection molding apparatus; Fig. 7aa shows the housing of the actuator decoupled from the mounting or clamp plate; Fig. 7b is a view similar to

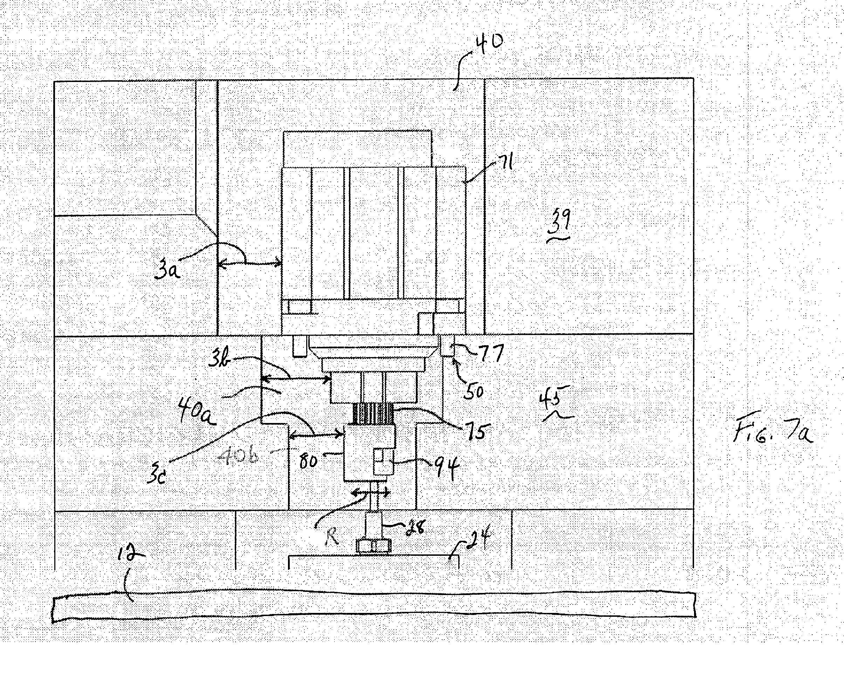

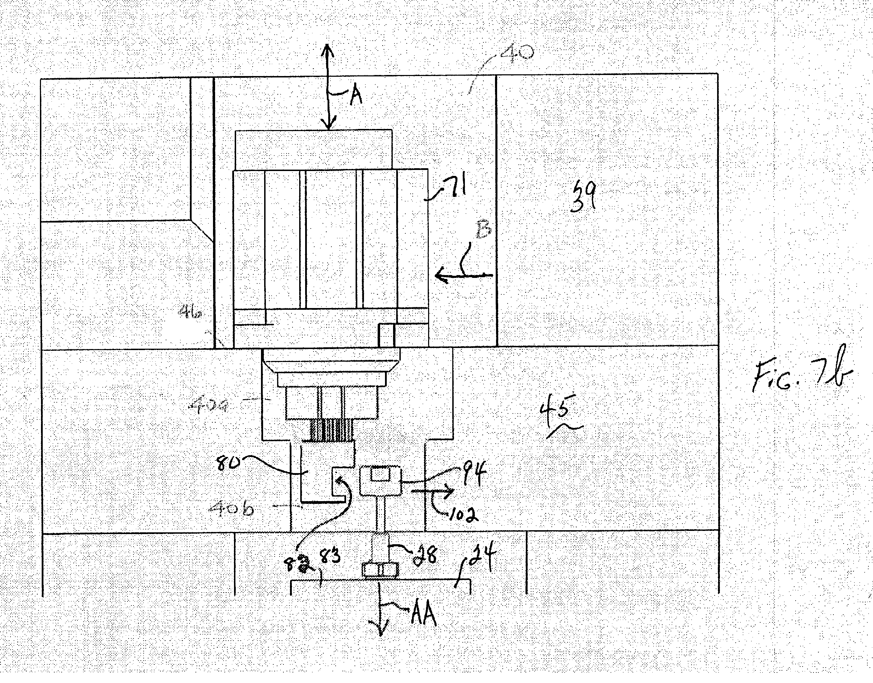

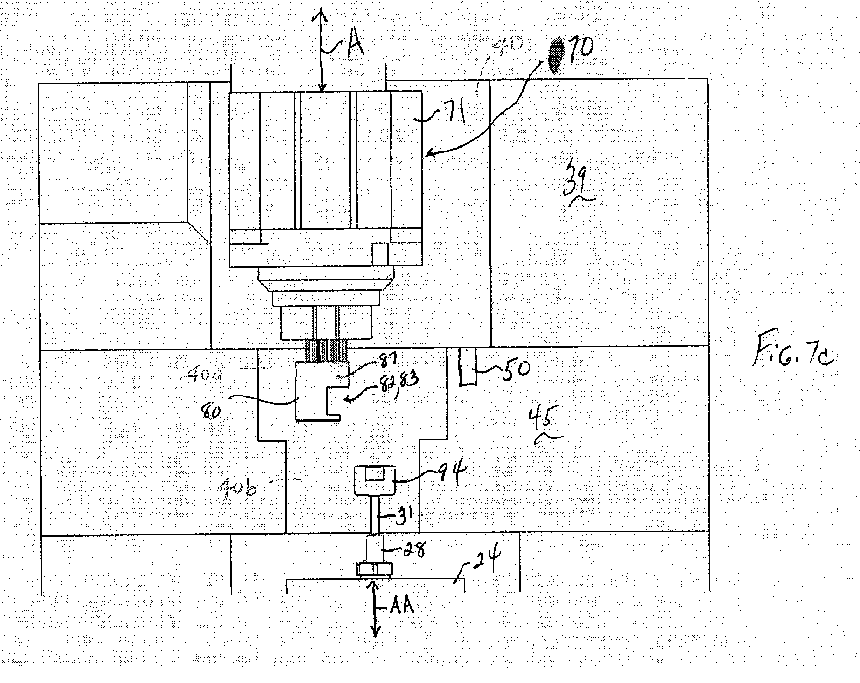

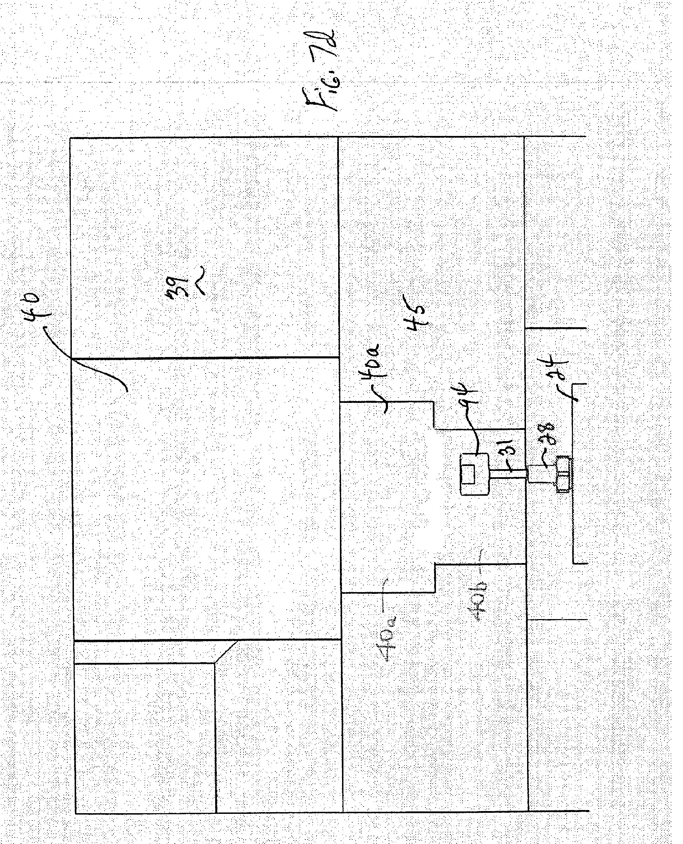

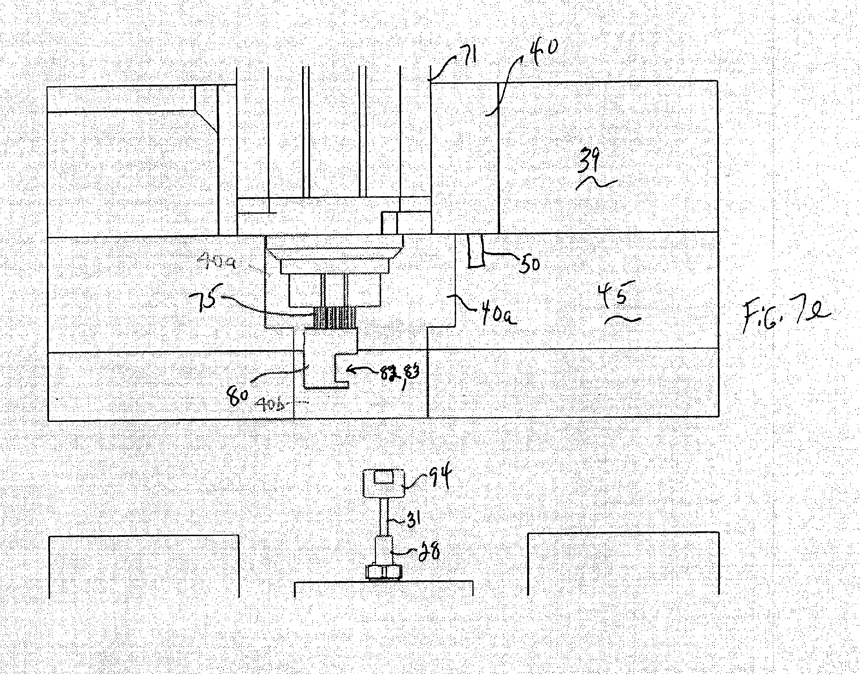

Fig. 7a after the actuator has been decoupled from the mounting plate and moved radially to the left to decouple the pin connector or adapter from the coupling at the downstream end of the actuator; Fig. 7c is a view similar to Fig. 7b but showing the actuator to being removed from the mounting plate while the valve pin assembly remains behind extended into the manifold; Fig. 7d is view showing the actuator having been removed from its former position disposed within or on the mounting plate leaving the pin stem behind mounted to the manifold; and Fig. 7e is a view showing the top mounting or clamp plates having been removed or decoupled from the mold together with the actuator having been decoupled from the pin connector leaving the pin stem behind mounted to the manifold.

### Detailed Description

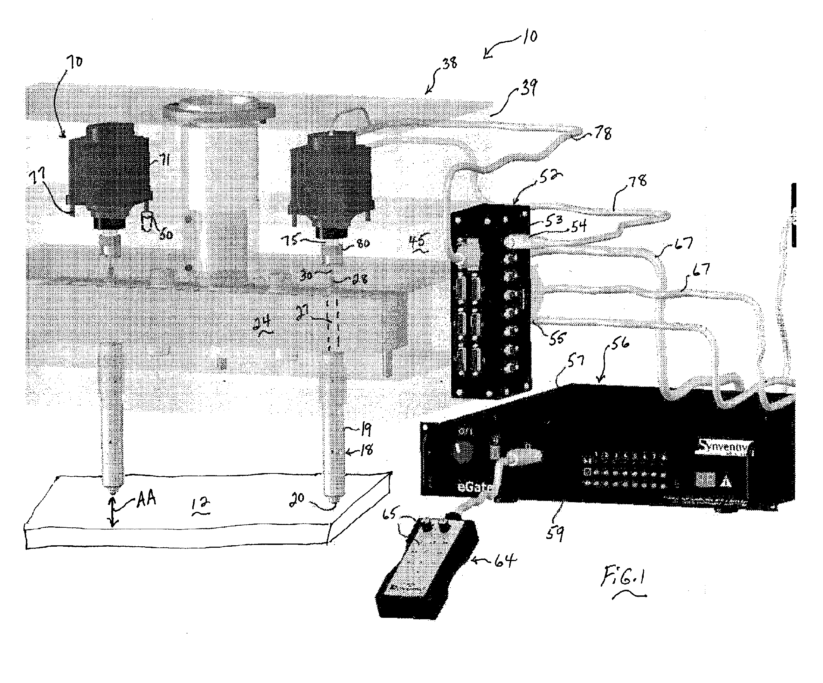

Fig. 1 is an overview of a coupling apparatus mounted in an injection molding apparatus according to one embodiment of the present invention. The coupling apparatus enables radial engagement and disengagement of an actuator and a valve pin assembly such that the valve pin assembly can remain extended into the manifold while the actuator either alone or together with the mounting plate, is/are removed.

An injection molding apparatus 10 includes a series of layered components forming a stack. Here the component layers of the stack are shown vertically arranged, one on top of another, although in use the entire stack would typically be rotated 90°. For ease of description, the stack will be described as a vertical stack even through in use it is not so disposed. At one end of the stack, here referred to as the bottom end of the stack, a mold 12 has a cavity (not shown) for receiving hot molten plastic fed through a gate 20 of an injection nozzle 18. The nozzle 18 is mounted in one or more metal (e.g. stainless steel) plates, including a heated manifold 24 and one or more other spacer, mounting or mold plates 13, 14. The manifold 24 is heated to maintain the nozzle 18 at an elevated temperature for delivery of the molten plastic. The mold cavity and plates 13, 14 are relatively cool compared to the manifold 24 to enable solidification of the injected molten plastic to form a solid plastic article within the cavity of the mold.

The nozzle 18 is an elongated tubular article 19 typically made of stainless steel and having a central axial bore 21 through which the molten plastic travels to the gate 20 and into the mold cavity. Also in the nozzle bore, aligned along the central bore axis, is an axially elongated valve pin 30 having an axially elongated stem 31, which defines the valve pin axis AA. At one end of the stem, designed to seat and unseat in the nozzle gate for purposes of opening and closing the gate, and effectively starting and stopping flow of the molten plastic to the mold cavity, the stem has an angular or tapered lowermost tip 32. At the opposite or upstream (top) end 33 of the valve stem 31 is a pin head 34 which in the present embodiment comprises a radially enlarged cylindrical member. The pin head 34 is designed to couple and decouple with an actuator, the actuator being a mechanism for driving the valve pin along an axial path of travel A typically substantially coincident with the central axial bore AA of the nozzle 18 which is substantially coincident with the pin axis AA. The valve stem also extends through an elongated plastic feed bore 27 in the heated manifold 24, typically also substantially coaxial with the nozzle bore. The valve stem 31 is guided into and mounted to the manifold 24 by a bushing 28 which receives, guides and mounts the valve stem 31 in the manifold plastic feed bore 27. The pin head 34 extends axially upstream beyond and from the bushing on the upstream or top side 25 of the manifold.

The pin head may be formed integral with the valve stem (as a single part) or it may be formed as a separate part and then secured to the upper or top end of the valve stem. It may or may not be radially enlarged but is typically formed in a radially enlarged configuration for ease of ready connectivity to and disconnectivity from an adapter component as described below.

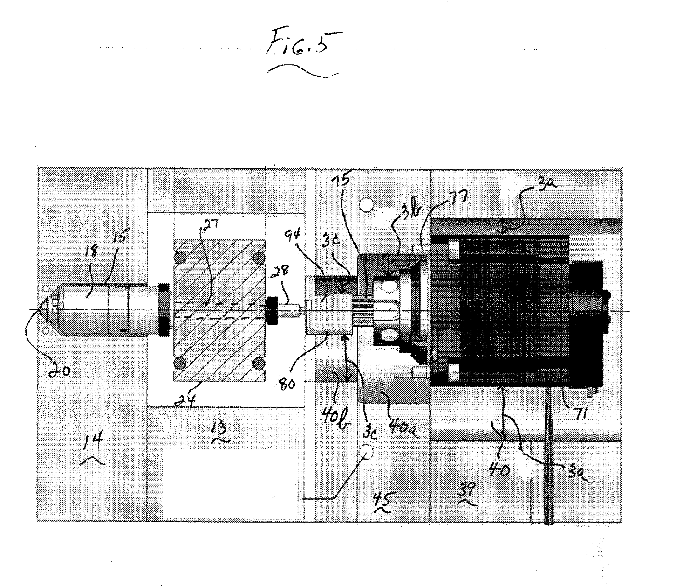

Above/upstream of the manifold 24, a pair of upper and lower mounting plates 39, 45 are provided in or on which the actuator 70 is mounted. The plates 39 and 45 are sometimes referred to as top clamping plates, clamping plates or backing plates. The actuator 70 is typically a linear actuator, such as an electrically powered motor actuator, for driving the valve pin stem axially (linearly) along the coaxial bores of the manifold and nozzle. The actuator can alternatively comprise a hydraulically or pneumatically driven actuator having an actuating member such as a piston that is reciprocally drivable along an axial path of travel by hydraulic or pneumatic fluid. In embodiments where the actuator comprises an electric motor, the motor is enclosed in a housing 71 which is typically disposed within a receiving aperture or chamber 40 in the upper mounting plate 39 and/or a chamber 40a in the lower mounting plate 45. Where the actuator is a hydraulic or pneumatic device, a similar housing for the driven actuating member is provided. In the embodiment shown, the housing 71 is fixed to the lower mounting plate 45 by threaded bolts 77 which extend into complementary threaded holes 50 in plate 45 so as to removably couple the actuator housing 71 to the mounting plate 39 (see Fig. 5). The mounting plates 39, 45 are removably coupled to the mold typically by bolts or similar reversible fastening mechanisms. The chamber 40 of the upper mounting plate 39 (in which the motor housing 71 is disposed) is actually a through bore in the upper plate 39 extending from the top surface 42 to the bottom surface 43. A drive shaft 75 of the electrically powered actuator having a motor extends downwardly into a co-axial bore 40a/40b in the lower mounting plate 45 (40/40a/40b are coaxial).

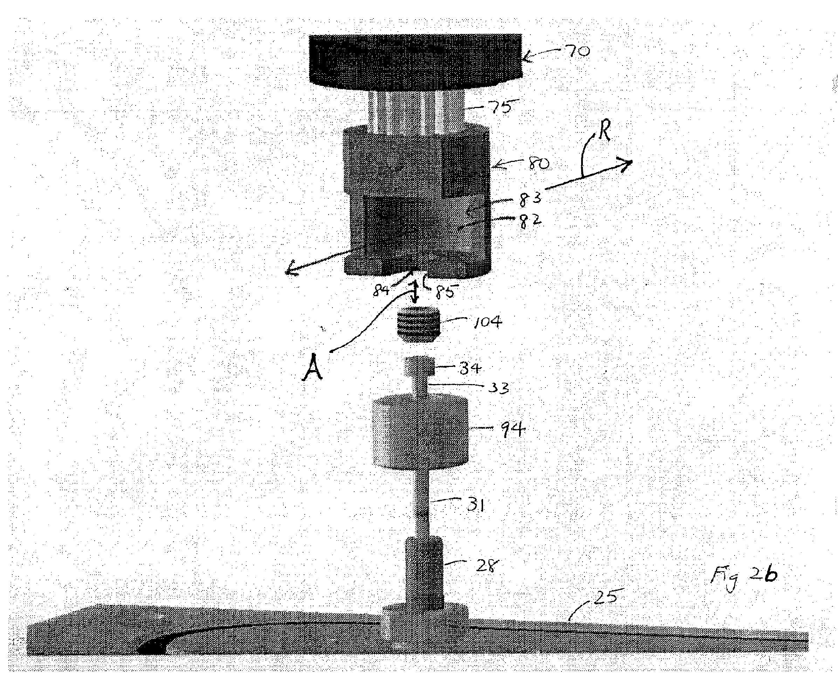

An actuator coupling 80 is attached to or mounted on the actuator shaft 75 and is also disposed in the bore 40a/40b of the lower mounting plate 39 when the actuator is connected to the mounting plate. The actuator coupling includes a radial recess 83, disposed laterally (traverse to the elongated valve pin axis. The recess has a radial recess opening 82 that allows a pin head adapter 94 to be radially inserted into and removed from the radial recess. The coupling 80 also includes a radial slot 84, connected (open) to the radial recess and extending downwardly to the lower surface 90 of the coupling. The radial slot has a radial slot opening 85 through which the valve stem 31 can be readily radially inserted or translated within (or removed from) the slot 84 while the adapter 94 is simultaneously radially inserted or translated within (or removed from) the radial recess 82. The coupling 80 has walls 91 that form and act as a housing for the radial recess 83 and radial slot 84. As shown, the pin connector 94 and the recess 83 and recess opening 84 are configured to have a complementary geometry, size, shape and configuration so as to enable the pin connector to be received within the recess 83 and fully surrounded and contained within walls 91 and also to require that the pin connector 94 is receivable within and removable from the recess 83 only by movement of the pin connector 94 in a radial direction R, Fig. 2b, transverse to the axial path of travel A of the actuating member 75 of the actuator 70. The pin connector 94 is slidable by manual force along radial direction R into and out of the recess 83 and recess opening 84. As shown when the pin connector 94 is slid into and out of recess 83 and opening 84, the pin stem 31 is simultaneously slidable radially through slot opening 85 into slot 84. The walls 91 act to retain and couple the pin connector 94 and associated pin stem 31 to the shaft 75 when the connector 94 is received within recess 83 and stem 31 in slot 84.

In addition, the radial recess 82 is sized and configured to provide a radial clearance 2 in all radial directions between the valve pin adapter 94 and the recess 82 when/while the adapter is received and coupled within the recess 82 of the coupling 80. This radial clearance 2 allows movement in any radial direction of the valve pin adapter while it is mounted in the recess of the actuator coupling, so as to accommodate differences in thermal expansion between various components of the injection molding apparatus such as between the manifold 24 and the mounting plates 39, 45. As previously described, the valve stem 31 is mounted to a manifold 24 when the system is assembled, the manifold being heated during the course of startup to a higher temperature than the relatively cold mounting plates 39, 45 and cold actuator 70. During the time when the manifold 24 is being heated to a higher temperature than the mounting plates and actuator, it is desirable to provide a radial clearance to allow the valve pin assembly (pin 30 and adapter 94), which is mounted to the manifold by the bushing 28 and travels radially therewith and is also being heated via the manifold, to move radially together with the manifold with respect to the mounting plate and the axial path of travel of the actuator so as to prevent the application of undesirable side bending forces on the valve pin assembly. These side forces may bend or break the valve stem or otherwise interfere with proper alignment and operation of the valve pin assembly and actuator.

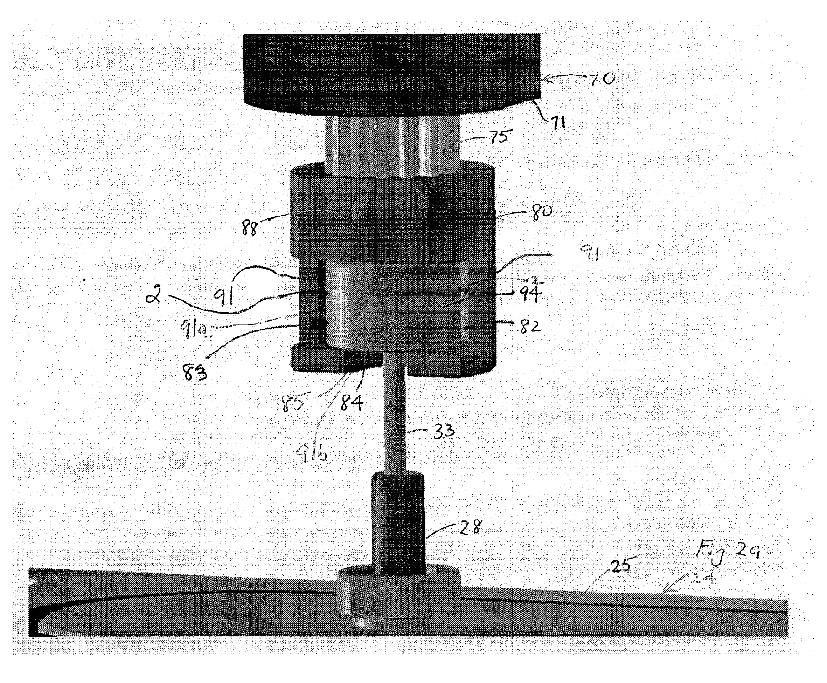

The structure and operation of this apparatus will be further explained in detail based on component part drawings (Figs. 2-6) and sequence (of operation) drawings (Figs. 7a-7e).

Figs. 2a-2b show one embodiment of the coupling apparatus in an assembled state (Fig. 2a) and a disassembled state (Fig. 2b). In Fig. 2a, the upper end of the valve pin is shown extending upwardly from a manifold bushing 28 secured to the top 25 of the manifold. The pin head 34, at the top end of the valve pin, is disposed within the pin head adapter 94 so it is not visible in Fig. 2a. The adapter is radially received in the radial recess 82 of the actuator coupling, while the valve stem 31 resides in the radial slot 84 of the coupling. As previously described, there is a radial clearance 2 provided between the interior surface 91 a of the walls 91 defining the radial recess 82 and outside surface of the adapter 94, and between the walls 91 b defining the radial slot 84 and valve stem 31, to allow for radial movement of the valve pin assembly (here the valve stem 31, pin head 34 and pin head adapter 94) with respect to the axial drive path A of the actuator 70. The actuator coupling 80 is connected to the spline shaft 75 of the electric actuator motor, by a pin 88 which extends through a bore 87 in the coupling and into a bore in the shaft. This prevents rotation of the coupling relative to the actuator shaft.

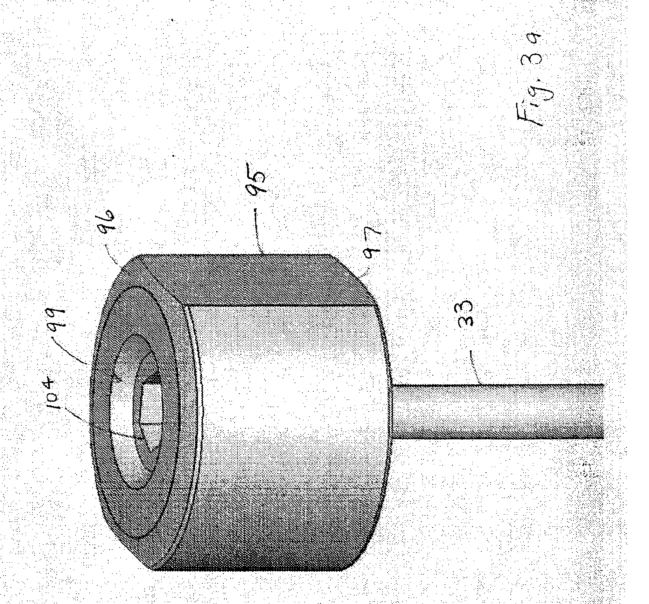

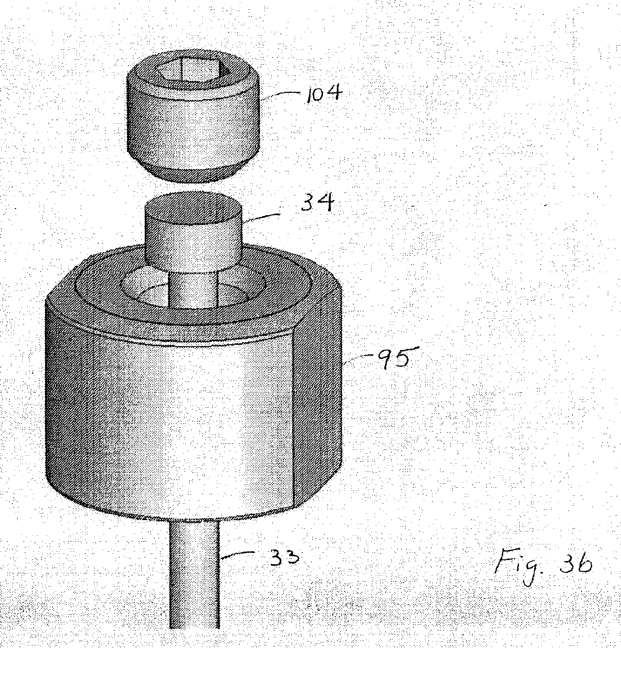

Fig. 2b shows the disassembled actuator coupling and pin head adapter. A cylindrical set screw 104 having outer threads is adapted for threaded engagement with the pin head adapter. This is further illustrated in Fig. 3a-3b. The pin head adapter 94 has a central axial through bore 99 extending from the top surface 96 to the bottom surface 97 of the adapter. The bore receives the upper end of the valve stem and pin head. The pin head sits on a shoulder 100 in the central bore and is secured in the adapter by screwing the set screw into a threaded upper portion of the bore, creating a pressure engagement of the pin head and adapter. In this embodiment, the adapter essentially functions as an enlarged pin head. In another embodiment, the adapter may not be required, as the pin head itself could be disposed in the radial recess of the actuator coupling.

Fig. 1 also shows the electrical cables for connecting the actuator to a controller. In this embodiment, the actuator is an electric motor having a linearly drivable shaft for engaging the pin head for axial movement of the valve stem in the manifold and nozzle so as to open and close the nozzle opening at the gate, by seating and unseating the valve stem tip in the gate. Controlling the valve stem position in the gate is important for creating clean injection molded parts without residues of undesired plastic, and to avoid freezing or closing off the gate with solidified plastic. In this embodiment, an electronic controller 56 is provided which monitors and controls the operation of the actuator, and thus axial movement of the actuator shaft and valve stem. A pair of electrical cables 78 connect the actuator motor 70 to a junction box 52. The junction box can be mounted in the mounting plates, along with the motor. This allows the actuator motor to remain with the mounting plates when they are (together) removed from the manifold, leaving behind the valve stem extended into the manifold and nozzle, and while leaving the electrical actuator wired to the junction box 52. The junction box housing 53 includes a series of electrical connectors 54 for receiving the electrical cables from the motor, and other connectors 55 for electrical cables 67 connecting the junction box to the controller for transmitting control signals from the controller. A user hand-held input device 64 is connected (via cable 66) to the front face 59 of the controller box 57 for inputting instructions (via hand-held buttons and knobs 65) to the controller regarding operation of the valve stem. In this embodiment, the control system includes sensors for monitoring the position of the valve pin in the gate, and resetting that position if it deviates from a desired position. The controller box 57 has a three series of LEDS for each of 8 actuators, the upper series 61 indicating "valve gate opened", the middle series 62 indicating "valve gate enabled", and the lower series 63 indication "valve gate closed." Control signals, and feedback sensor signals are transmitted to and from the controller for monitoring and adjusting the pin position during the injection molding cycle. The sensitivity of these adjustments, which must be transmitted via the drive shaft to the valve pin, make the structure and function of the coupling adapter of particular importance in the present embodiment. The coupling adapter can isolate both undesirable mechanical effects (e.g., vibration, rotation) and thermal effects from interfering with this sensitive control operation.

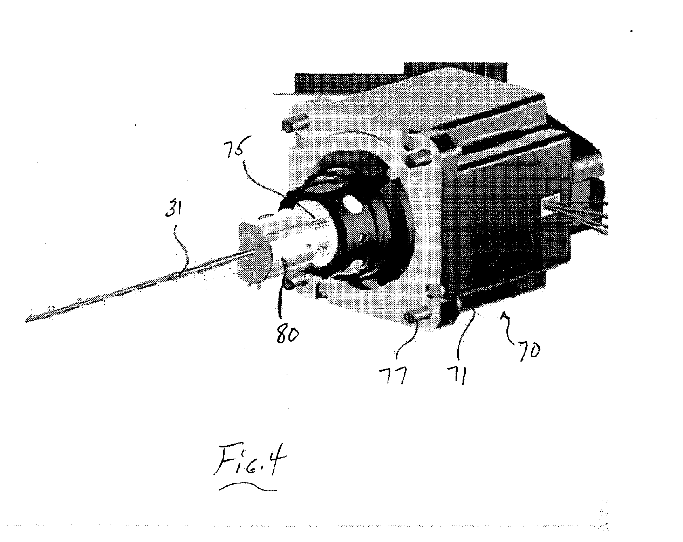

Figs. 4-6 show in greater detail a particular embodiment of the electric actuator and valve stem assembly. Fig. 4 shows an actuator having an electrically powered drive motor contained in a rectangular outer housing 71 that encases the motor, and including four bores 76, one in each corner of the housing, for receiving bolts 77 that removably couple the motor housing 71 to the lower mounting plate 45. Four complementary tapped holes 50 are provided in the upper surface 48 of the lower mounting plate 45 for receiving the bolts 77 and securing the motor housing to the plate. This prevents rotational and other movement of the housing of the motor with respect to the mounting plates and manifold and the injection molding apparatus generally. Extending downwardly from the motor housing 71 is a cylindrical projection 74 from which the cylindrical drive shaft 75 of the motor extends. Coupled to the downstream end of the drive shaft is the actuator coupling 80 and extending axially downstream from the coupling 80 is the valve stem 31.

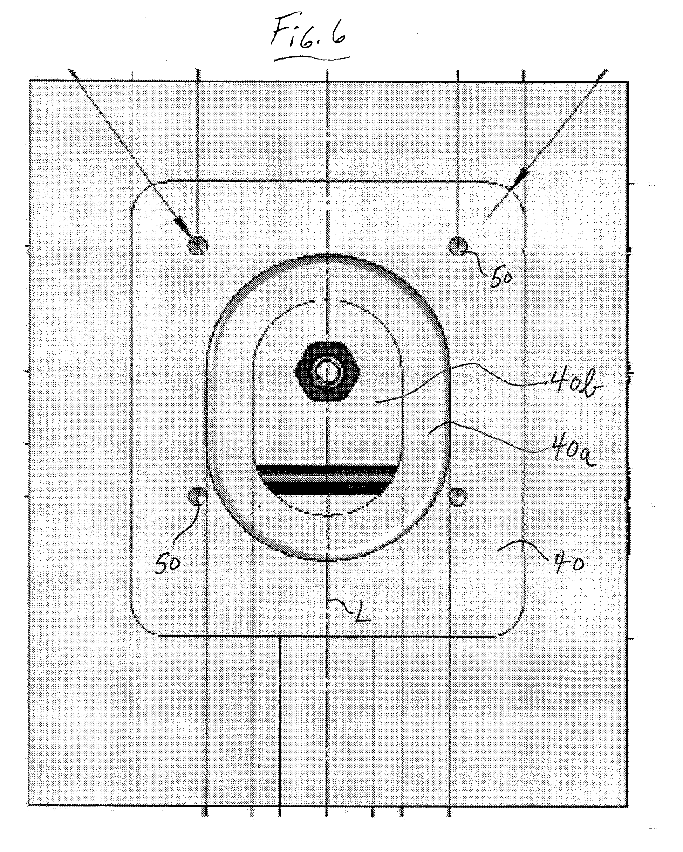

Fig. 5 is a cross section showing the injection molding stack. As previously described, a heated manifold 24 is disposed between the mounting plates 39/45 and mold plates 13/14. In use, the mounting plates and mold plates are fixedly secured together under high clamp pressure, so as to withstand high injection molding forces. A nozzle 18 extends through a bore 15 in the lower mold plate 14, and seats and unseats in the gate 20 to the injection mold cavity. The actuator housing 71 is disposed in a chamber 40 of the upper mounting plate 39, with a radial clearance 3 provided in at least one radial direction so as to facilitate the radial coupling and decoupling of the pin head adapter and actuator coupling. Similarly, there is a radial clearance 3b/3c to allow the projecting shaft 75 and adapter 80 to move radial in the plates. Fig. 6 is a top plan view of the apparatus of Fig. 5, but with the electric motor removed. The chamber 40 has a rectilinear cross section. Below the chamber 40, the upper bore 40a has an oval cross section, and the lower bore 40b also has an oval but smaller, cross section, providing a radial clearance along the long axis L of the oval, to facilitate the assembly and disassembly steps described below.

Figs. 7a - 7e illustrate a variety of steps for decoupling the actuator from the mounting plate 39 and for decoupling the valve pin assembly 30, 94 from the actuator coupling 80 and the mounting plate 39, 45, according to one embodiment. In Fig. 7a, the actuator is shown coupled to the valve pin assembly, with the actuator secured to the lower mounting plate and the valve pin assembly mounted in the actuator coupling. This illustrates the actuator and valve pin assembly as assembled during the injection molding cycle, wherein the axial drive path of travel AA of the actuator is substantially axially aligned with the valve stem axis, as the valve stem extends through the axis of the plastic feed bores of the manifold 27 and nozzle 18. The mounting plates 39 45 are clamped to the mold 12 with the manifold 24 secured between the mounting plates and mold.

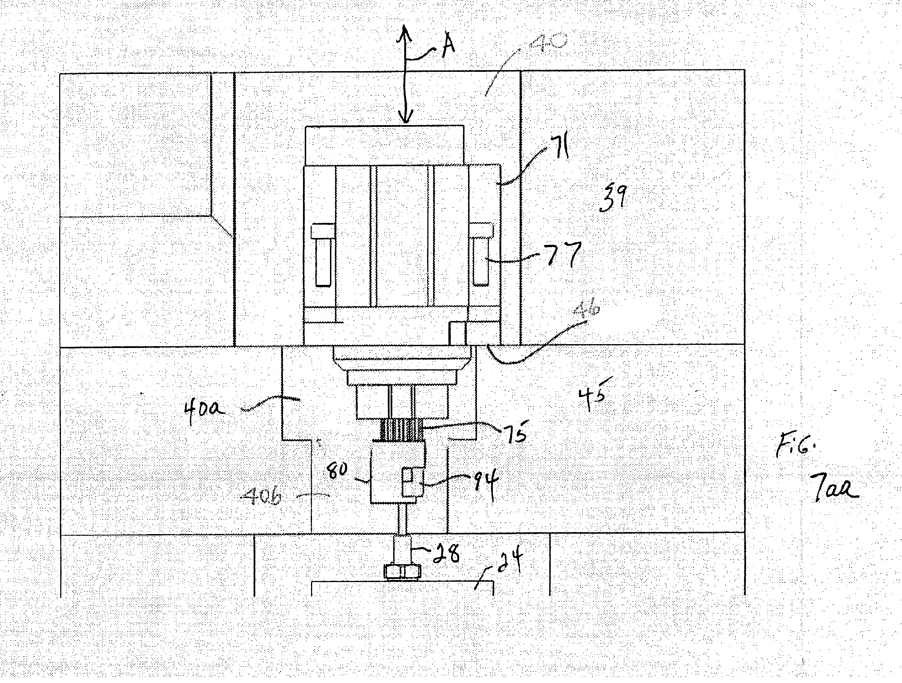

In Fig. 7aa the bolts 77 are decoupled from the complementary receiving apertures 50 in the clamp plate 39 thus decoupling the housing 71 from the clamp plate 45. As shown the housing 71 and associated shaft 75 of the actuator are disposed upon decoupling of the housing within the plate receiving apertures 40, 40a, 40b. In Fig. 7b, the first two steps of disassembly have been performed. The bolts have been removed and then the actuator housing 71 is moved laterally or radially in direction S so as to decouple pin connector 94 from coupling 80 by sliding the connector 94 radially 102, (Fig. 7b) out of the recess 82, 83 of the coupling. Upon such decoupling of the connector 94, the pin stem 31 and associated parts such as the pin head 34 and connector 94 and set screw 104 remain behind mounted to the manifold 24 while the actuator 70, is still disposed on the plate 45 and within the recesses 40, 40a, 40b of the mounting plates 39, 45. In a further subsequent operation, the actuator 70 can be removed entirely, Figs. 7c, 7d, for replacement or repair of the actuator, from the recesses 40, 40a. During this operation the valve pin assembly again remains stationary and behind mounted to the manifold and does not require removal of the pin 30.

With reference to Fig. 7e, alternatively to removal of only the actuator 70, the mounting plates 39 and/or 45 can also be removed alone or together with the actuator 70 from the mold 12 once the actuator is decoupled from the pin connector 94 without requiring removal of the valve pin 30 (and pin connector 94) from the manifold or nozzle. Thus either the clamp plates 39, 45 can be removed from the system once the pin is decoupled from the actuator coupling 80, or the actuator 70 can removed from the system once the pin is decoupled from the actuator coupling 80, or both the plates and the actuator can be removed from the system once the pin is decoupled from the actuator coupling 80, all such removals being accomplished without removal of the pin 30 from the manifold or nozzle. Where the actuator 70 contains an electrically powered motor, these removal operations can also be accomplished without removing the wiring 78, Fig. 1, connecting the electric motor to the electrical junction box 52 and/or controller 56. The benefit of this alternative is a substantial time savings as the service technician does not have to disconnect the wires from the actuator to the junction box. The service technician can now obtain access to various aspects of the injection molding apparatus, e.g., replacing a thermocouple on the manifold.

Having now described the limited number of embodiments of the present invention it should be apparent to those skilled in the art that numerous embodiments and modifications thereof are contemplated as falling within the scope of the invention as defined by the pending claims.

## Claims

1. An injection molding system comprising an actuator (70), a mounting plate (39, 45), a mold (13, 14) and a manifold (24) mounted between the mounting plate and the mold,
the actuator comprising an axially drivable shaft (75) and a housing (71);
a valve pin (30) coupled to the shaft (75) of the actuator for movement of the valve pin together with movement of the shaft, the valve pin comprising a pin stem (31) and a pin head (34, 94);
the actuator having an actuator coupling (80) adapted to reversibly couple to and decouple from the pin head (34) in a radial direction, the pin stem (31) extending from the actuator (70) into the manifold (24) when the housing (71) of the actuator is coupled to the mounting plate (39, 45) and the pin head (34) is received within the actuator coupling (80); **characterized in that**:
the actuator housing (71) is removably coupled to and mounted on or within the mounting plate (39, 45) which is removably coupled to the mold, the actuator housing (71) being radially movable upon decoupling of the actuator housing (71) from the mounting plate (39, 45) such that the pin head (34) is decouplable from the actuator coupling (80) upon said radial movement while the actuator housing (71) is disposed on or within the mounting plate (39, 45), the actuator (70) being removable from on or within the mounting plate (39, 45) leaving the valve stem (31) behind extending into the manifold (24) and the mounting plate (39, 45) coupled to the mold (13, 14).

2. The system of claim 1 wherein the pin head comprises an adapter (94) removably coupled to a top end of the stem (31), the adapter (94) configured to be reversibly receivable within the actuator coupling (80) in a radial direction (R).

3. The system of claim 2 wherein the adapter comprises either an enlarged head (34) or a thread which is reversibly couplable to and decouplable from an adapter head (94) that is reversibly receivable within the actuator coupling.

4. The system of claim 1 wherein the system is adapted to allow the pin head (34, 94) to travel a selected radial distance within the actuator coupling (80) and remain coupled while the mounting plate (39, 45) is coupled to the mold (13, 14), the pin head (34, 94) is coupled to the actuator coupling (80) and the pin stem (31) is extended into the manifold (24).

5. The system of claim 1 wherein the pin stem (31) is mounted to the manifold (24) for radial movement of the pin stem (31) together with the manifold (24) relative to the mounting plate (39, 45).

6. The system of claim 2 wherein the system is adapted to allow the adapter (94) to travel a selected radial distance within the actuator coupling (80) while the mounting plate (39, 45) is coupled to the mold (13, 14), the pin head (34, 94) is coupled to the actuator coupling (80) and the pin stem (31) is extended into the manifold (24).

7. The system of claim 1 wherein the mounting plate (39, 45) is decouplable from the mold (13, 14) leaving the pin stem (31) extended into the manifold (24) when the pin head (34, 94) is decoupled from the actuator coupling (80).

8. The system of claim 1, wherein the actuator housing (71) is removably coupled to and mounted within the mounting plate (39, 45) which is removably coupled to the mold, the actuator housing (71) being radially movable for radial movement upon decoupling of the actuator housing (71) from the mounting plate (39, 45) such that the pin head (34) is decouplable from the actuator coupling (80) upon said radial movement while the actuator housing (71) is disposed within the mounting plate (39, 45), the actuator (70) being removable from within the mounting plate (39, 45) leaving the valve stem (31) behind extending into the manifold (24).

9. The system according to claim 1 or 8, wherein a pair of upper and lower mounting plates (39, 45) are provided in which the actuator (70) is mounted.

10. The system according to claim 9, wherein the actuator housing (71) is disposed within a receiving chamber (40) in the upper mounting plate (39) and/or a chamber (40a, 40b) in the lower mounting plate (45).

11. The system of claim 9 or 10 wherein the mounting plates (39, 45) are removably coupled to the mold by bolts or similar reversible fastening mechanisms.

12. The system of claim 9 or 10 or 11, wherein chamber (40) of the upper mounting plate (39) in which the housing (71) is disposed is a through bore in the upper plate (39) extending from the top surface (42) to the bottom surface (43) thereof.

13. Method of disassembling an assembled injection molding system comprising an actuator (70), a mounting plate (39, 45), a mold (13, 14) and a manifold (24) mounted between the mounting plate (39, 45) and the mold (13, 14), the mounting plate (39, 45) being removably coupled to the mold (13,14), wherein the actuator (70) comprises an axially drivable shaft (75) and a housing (71) removably coupled to the mounting plate (39, 45); wherein a valve pin (30) is coupled to the shaft (75) of the actuator for movement of the valve pin (30) together with movement of the shaft (75), the valve pin comprising a pin stem (31) and a pin head (34, 94), the actuator having an actuator coupling (80) adapted to reversibly couple to and decouple from the pin head (34, 94) in a radial direction (R), **characterized in that** the method comprises:
decoupling the actuator housing (71) from the mounting plate (39, 45) while the mounting plate (39, 45) remains coupled to the mold (13, 14);
moving the actuator housing (71) laterally (R) on or within the mounting plate (39, 45) a distance sufficient to decouple the pin head (34, 94) from the actuator coupling (80);
removing the actuator (70) from on or within the mounting plate (39, 45) leaving the valve pin (30) behind extended into the manifold (24) and the mounting plate coupled to the mold.

14. The method of claim 13 further comprising decoupling and removing the mounting plate (39, 45) from the mold (13, 14) leaving the valve pin (30) behind extended into the manifold (24).

15. The method of claim 13 further comprising removing the actuator (70) and the mounting plate (39, 45) together leaving the valve pin (30) behind extended into the manifold (24).

## Patentansprüche

1. Spritzgusssystem umfassend einen Aktuator (70), eine Befestigungsplatte (39, 45), eine Form (13, 14) und einen Verteiler (24), der zwischen der Befestigungsplatte und der Form befestigt ist,
der Aktuator umfassend einen axial antreibbaren Schaft (75) und ein Gehäuse (71); einen Ventilzapfen (30), der an den Schaft (75) des Aktuators zur Bewegung des Ventilzapfens zusammen mit Bewegung des Schafts gekoppelt ist, wobei der Ventilzapfen einen Zapfenstamm (31) und einen Zapfenkopf (34, 94) umfasst; wobei der Aktuator eine Aktuatorkopplung (80) aufweist, die angepasst ist, reversibel an den Zapfenkopf in einer radialen Richtung zu koppeln und davon zu entkoppeln, wobei der Zapfenstamm (31) sich vom Aktuator (70) in den Verteiler (24) hinein erstreckt, wenn das Gehäuse (71) des Aktuators an die Befestigungsplatte (39, 45) gekoppelt ist und der Zapfenkopf (34) innerhalb der Aktuatorkopplung (80) aufgenommen wird; **dadurch gekennzeichnet, dass**:
das Aktuatorgehäuse (71) entfernbar an und befestigt auf oder in der Befestigungsplatter (39, 45) gekoppelt ist, die entfernbar an die Form gekoppelt ist, wobei das Aktuatorgehäuse (71) beim Entkoppeln des Aktuatorgehäuses (71) von der Befestigungsplatte (39, 45) radial beweglich ist, sodass der Zapfenkopf (34) von der Aktuatorkopplung (80) bei der radialen Bewegung entkoppelbar ist, während das Aktuatorgehäuse (71) auf oder in der Befestigungsplatte (39, 45) angeordnet ist, wobei der Aktuator (70) auf oder in der Befestigungsplatte (39, 45) entfernbar ist, wodurch der Ventilstamm (31) zurückbleibt, sich in den Verteiler (24) und die Befestigungsplatte (39, 45), die an die Form gekoppelt ist, hinein erstreckend.

2. System nach Anspruch 1, wobei der Zapfenkopf einen Adapter (94) umfasst, entfernbar gekoppelt an ein oberes Ende des Stamms (31), wobei der Adapter (94) konfiguriert ist, reversibel innerhalb der Aktuatorkopplung (80) in einer radialen Richtung (R) aufgenommen zu werden.

3. System nach Anspruch 2, wobei der Adapter entweder einen vergrößerten Kopf (34) oder ein Gewinde umfasst, das/der reversibel an und entkoppelbar von einem Adapterkopf (94) ist, der reversibel innerhalb der Aktuatorkopplung aufnehmbar ist.

4. System nach Anspruch 1, wobei das System angepasst ist, um dem Zapfenkopf (34, 94) zu erlauben, eine ausgewählte radiale Entfernung innerhalb der Aktuatorkopplung (80) auszulenken und gekoppelt zu bleiben, während die Befestigungsplatte (39, 45) an die Form (13, 14) gekoppelt ist, wobei der Zapfenkopf (34, 94) an die Aktuatorkopplung (80) gekoppelt ist und der Zapfenstamm (31) in den Verteiler (24) ausgefahren ist.

5. System nach Anspruch 1, wobei der Zapfenstamm (31) an den Verteiler (24) für radiale Bewegung des Zapfenstamms (31) zusammen mit dem Verteiler (24) relativ zur Befestigungsplatte (39, 45) gekoppelt ist.

6. System nach Anspruch 2, wobei das System angepasst ist, um dem Adapter (94) zu erlauben, eine ausgewählte radiale Entfernung innerhalb der Aktuatorkopplung (80) auszulenken, während die Befestigungsplatte (39, 45) an die Form (13, 14) gekoppelt ist, der Zapfenkopf (34, 94) an die Aktuatorkopplung (80) gekoppelt ist und der Zapfenstamm (31) in den Verteiler (24) ausgefahren ist.

7. System nach Anspruch 1, wobei die Befestigungsplatte (39, 45) von der Form (13, 14) entkoppelbar ist, wobei der Zapfenstamm (31) in den Verteiler (24) ausgefahren zurückbleibt, wenn der Zapfenkopf (34, 94) von der Aktuatorkopplung entkoppelt wird.

8. System nach Anspruch 1, wobei das Aktuatorgehäuse (71) entfernbar an die Befestigungsplatte (39, 45), die entfernbar an die Form gekoppelt ist, gekoppelt und innerhalb dieser befestigt ist, wobei das Aktuatorgehäuse (71) radial beweglich ist, um bei Entkopplung des Aktuatorgehäuses (71) von der Befestigungsplatte (39, 45) sich radial zu bewegen, sodass der Zapfenkopf (34) von der Aktuatorkopplung (80) bei der radialen Bewegung entkoppelbar ist, während das Aktuatorgehäuse (71) innerhalb der Befestigungsplatte (39, 45) angebracht ist, wobei der Aktuator (70) von der Befestigungsplatte (39, 45) entfernbar ist, wobei der Ventilstamm (31) zurückbleibt, sich in den Verteiler (24) hinein erstreckend.

9. System nach Anspruch 1 oder 8, wobei ein Paar unterer und oberer Befestigungsplatten (39, 45) bereitgestellt sind, in denen der Aktuator (70) befestigt ist.

10. System nach Anspruch 9, wobei das Aktuatorgehäuse (71) innerhalb einer Aufnahmekammer (40) in der oberen Befestigungsplatte (39) und/oder einer Kammer (40a, 40b) in der unteren Befestigungsplatte (45) angebracht ist.

11. System nach Anspruch 9 oder 10, wobei die Befestigungsplatten (39, 45) durch Bolzen oder ähnliche reversible Verankerungsmechanismen entfernbar an die Form gekoppelt sind.

12. System nach Anspruch 9, oder 10 oder 11, wobei die Kammer (40) der oberen Befestigungsplatte (39), in der das Gehäuse (71) angebracht ist, eine Durchgangsöffnung in der oberen Platte (39) ist, die sich von der Oberseite (42) bis zur Unterseite derselben erstreckt.

13. Verfahren zum Auseinanderbauen eines zusammengebauten Spritzgusssystems umfassend einen Aktuator (70), eine Befestigungsplatte (39, 45), eine Form (13, 14) und einen Verteiler (24), der zwischen der Befestigungsplatte und der Form (13, 14) befestigt ist, wobei die Befestigungsplatte (39, 45) entfernbar an die Form (13, 14) gekoppelt ist, wobei der Aktuator einen axial antreibbaren Schaft (75) und ein Gehäuse (71) umfasst; wobei ein Ventilzapfen (30) an den Schaft (75) des Aktuators zur Bewegung des Ventilzapfens zusammen mit Bewegung des Schafts gekoppelt ist, wobei der Ventilzapfen einen Zapfenstamm (31) und einen Zapfenkopf (34, 94) umfasst, wobei der Aktuator eine Aktuatorkopplung (80) aufweist, die angepasst ist, reversibel an den Zapfenkopf in einer radialen Richtung zu koppeln und davon zu entkoppeln, **dadurch gekennzeichnet, dass** das Verfahren umfasst:
Entkoppeln des Aktuatorgehäuses (71) von der Befestigungsplatte (39, 45), während die Befestigungsplatte (39, 45) an die Form (13, 14) gekoppelt bleibt; Bewegen des Aktuatorgehäuses (71) lateral (R) auf oder innerhalb der Befestigungsplatte (39, 45) um eine Entfernung ausreichend, um den Zapfenkopf (34, 94) von der Aktuatorkopplung (80) zu entkoppeln;
Entfernen des Aktuators (70) von oder innerhalb der Befestigungsplatte (39, 45), wobei der Ventilzapfen (30) zurückbleibt, sich in den Verteiler (24) und die Befestigungsplatte, die an die Form gekoppelt ist, hinein erstreckend.

14. Verfahren nach Anspruch 13, weiter umfassend Entkoppeln und Entfernen der Befestigungsplatte (39, 45) von der Form (13, 14), wobei der Ventilzapfen (30) sich in den Verteiler (24) hinein erstreckend zurückbleibt.

15. Verfahren nach Anspruch 13, weiter umfassend Entfernen des Aktuators (70) und der Befestigungsplatte (39, 45) zusammen, wobei der Ventilzapfen (30) sich in den Verteiler (24) hinein erstreckend zurückbleibt.

## Revendications

1. Système de moulage par injection comprenant un actionneur (70), une plaque de montage (39, 45), un moule (13, 14) et un collecteur (24) monté entre la plaque de montage et le moule,
l'actionneur comprenant un arbre entraîné axialement (75) et un boîtier (71);
une broche de valve (30) couplée à l'arbre (75) de l'actionneur pour un mouvement de la broche de valve ensemble avec le mouvement de l'arbre, la broche de valve comprenant une tige de broche (31) et une tête de broche (34, 94) ;
l'actionneur ayant un couplage d'actionneur (80) adapté à se coupler et à se désaccoupler de façon réversible depuis la tête de broche (34) dans une direction radiale, la tige de broche (31) s'étendant depuis l'actionneur (70) jusque dans le collecteur (24) quand le boîtier (71) de l'actionneur est couplé à la plaque de montage (39, 45) et la tête de broche (34) est reçue à l'intérieur du couplage d'actionneur (80) ; **caractérisé en ce que** :
le boîtier d'actionneur (71) est couplé de façon amovible et est monté sur ou dans la plaque de montage (39, 45) qui est couplée de façon amovible au moule, le boîtier d'actionneur (71) étant radialement mobile lors du désaccouplement du boîtier d'actionneur (71) depuis la plaque de montage (39, 45), de telle façon que la tête de broche (34) est susceptible d'être désaccouplée vis-à-vis du couplage d'actionneur (80) lors dudit mouvement radial alors que le boîtier d'actionneur (71) est disposé sur ou dans la plaque de montage (39, 45), l'actionneur (70) étant amovible de la plaque de montage (39, 45), en laissant la broche de valve (31) derrière s'étendant dans le collecteur (24) et la plaque de montage (39, 45) couplée au moule (13, 14).

2. Système selon la revendication 1, dans lequel la tête de broche comprend un adaptateur (94) couplé de façon amovible à une extrémité supérieure de la broche (31), l'adaptateur (94) étant configuré pour être reçu de façon réversible dans le couplage d'actionneur (80) dans une direction radiale (R).

3. Système selon la revendication 2, dans lequel l'adaptateur comprend soit une tête élargie (34) soit un pas de vis qui est susceptible d'être couplé de façon réversible sur et d'être désaccouplé vis-à-vis d'une tête d'adaptateur (94) qui est susceptible d'être reçue de façon réversible dans le couplage d'actionneur.

4. Système selon la revendication 1, dans lequel le système est adapté à permettre à la tête de broche (34, 94) de se déplacer sur une distance radiale sélectionnée à l'intérieur du couplage d'actionneur (80) et à rester couplée alors que la plaque de montage (39, 45) est couplée au moule (13, 14), la tête de broche (34, 94) est couplée au couplage d'actionneur (80) et la tige de broche (31) s'étend jusque dans le collecteur (24).

5. Système selon la revendication 1, dans lequel la tige de broche (31) est montée sur le collecteur (24) pour un mouvement radial de la tige de broche (31) ensemble avec le collecteur (24) par rapport à la plaque de montage (39, 45).

6. Système selon la revendication 2, dans lequel le système est adapté à permettre à l'adaptateur (94) de se déplacer d'une distance radiale sélectionnée à l'intérieur du couplage d'actionneur (80) alors que la plaque de montage (39, 45) est couplée au moule (13, 14), la tête de broche (34, 94) est couplée au couplage d'actionneur (80) et la tige de broche (31) s'étend jusque dans le collecteur (24).

7. Système selon la revendication 1, dans lequel la plaque de montage (39, 45) est susceptible d'être désaccouplée depuis le moule (13, 14) en laissant la tige de broche (31) s'étendre jusque dans le collecteur (24) quand la tête de broche (34, 94) est désaccouplée vis-à-vis du couplage d'actionneur (80).

8. Système selon la revendication 1, dans lequel le boîtier d'actionneur (71) est couplé de manière amovible sur et monté dans la plaque de montage (39, 45) qui est couplée de façon amovible au moule, le boîtier d'actionneur (71) étant radialement déplaçable pour un mouvement radial lors du désaccouplement du boîtier d'actionneur (71) vis-à-vis de la plaque de montage (39, 45), de sorte que la tête de broche (34) est susceptible d'être désaccouplée vis-à-vis du couplage d'actionneur (80) lors dudit mouvement radial alors que le boîtier d'actionneur (71) est disposé dans la plaque de montage (39, 45), l'actionneur (70) étant amovible de la plaque de montage (39, 45) en laissant la broche de valve (31) derrière s'étendant jusque dans le collecteur (24).

9. Système selon la revendication 1 ou 8, dans lequel il est prévu une paire de plaques de montage (39, 45) supérieure et inférieure, dans lesquelles l'actionneur (70) est monté.

10. Système selon la revendication 9, dans lequel le boîtier d'actionneur (71) est disposé dans une chambre de réception (40) dans la plaque de montage supérieure (39) et/ou une chambre (40a, 40b) dans la plaque de montage inférieure (45).

11. Système selon la revendication 9 ou 10, dans lequel les plaques de montage (39, 45) sont couplées de façon amovible au moule par des boulons ou par des mécanismes de fixation réversibles similaires.

12. Système selon la revendication 9 ou 10 ou 11, dans lequel la chambre (40) de la plaque de montage supérieure (39) dans laquelle le boîtier (71) est disposé est un perçage traversant dans la plaque supérieure (39) s'étendant depuis la surface supérieure (42) jusqu'à la surface inférieure de celle-ci (43).

13. Procédé pour désassembler un système de moulage par injection assemblé comprenant un actionneur (70), une plaque de montage (39, 45), un moule (13, 14) et un collecteur (24) monté entre la plaque de montage (39, 45) et le moule (13, 14), la plaque de montage (39, 45) étant couplée de façon amovible au moule (13, 14), dans lequel l'actionneur (70) comprend un arbre entraîné axialement (75) et un boîtier (71) couplé de façon amovible à la plaque de montage (39, 45) ; dans lequel une broche de valve (30) est couplée à l'arbre (75) de l'actionneur pour un mouvement de la broche de valve (30) ensemble avec un mouvement de l'arbre (75), la broche de valve comprenant une tige de broche (31) et une tête de broche (34, 94), l'actionneur ayant un couplage d'actionneur (80) adapté à se coupler et à se désaccoupler de façon réversible vis-à-vis de la tête de broche (34, 94) dans une direction radiale (R), **caractérisé en ce que** le procédé comprend:
désaccoupler le boîtier d'actionneur (71) depuis la plaque de montage (39, 45) tandis que la plaque de montage (39, 45) reste couplée au moule (13, 14) ;
déplacer le boîtier d'actionneur (71) latéralement (R) sur ou dans la plaque de montage (39, 45) d'une distance suffisante pour désaccoupler la tête de broche (34, 94) vis-à-vis du couplage d'actionneur (80) ;
enlever l'actionneur (70) depuis ou dans la plaque de montage (39, 45) en laissant la broche de valve (30) derrière en s'étendant jusque dans le collecteur (24) et la plaque de montage couplée au moule.

14. Procédé selon la revendication 13, comprenant en outre l'étape consistant à désaccoupler et à enlever la plaque de montage (39, 45) depuis le moule (13, 14) en laissant la broche de valve (30) derrière en s'étendant jusque dans le collecteur (24).

15. Procédé selon la revendication 13, comprenant en outre l'étape consistant à enlever l'actionneur (70) et la plaque de montage (39, 45) ensemble en laissant la broche de valve (30) derrière en s'étendant jusque dans le collecteur (24).
